Europäisches Patentamt

European Patent Office  (11) Numéro de publication: **0 112 735**
**A1**
Office européen des brevets

(12) **DEMANDE DE BREVET EUROPEEN**

(21) Numéro de dépôt: **83402193.3**

(51) Int. Cl.³: **B 62 D 53/08**

(22) Date de dépôt: **10.11.83**

(30) Priorité: **12.11.82 FR 8219014**
**14.06.83 FR 8309790**
**17.10.83 FR 8316457**

(71) Demandeur: **Pinoit, Guy, 7 bis place du Champ de Mars,**
**F-76260 Eu (FR)**

(43) Date de publication de la demande: **04.07.84**
**Bulletin 84/27**

(84) Etats contractants désignés: **AT BE CH DE GB IT LI NL**

(72) Inventeur: **Pinoit, Guy, 7 bis place du Champ de Mars,**
**F-76260 Eu (FR)**

(54) **Appareil auxiliaire d'entraînement manuel pour remorque, notamment pour caravane.**

㊸ L'invention concerne un appareil auxiliaire d'entraînement pour remorque munie d'une roue folle auxiliaire.

Elle se rapporte à un appareil dans lequel la roue folle auxiliaire est remplacée par des roues menées (48, 50), qui peuvent être entraînées en rotation par une manivelle (70). De cette manière, un opérateur peut déplacer la remorque sur un sol quelconque, en exerçant des efforts limités.

Application aux caravanes.

1

Appareil auxiliaire d'entraînement manuel pour remorque, notamment pour caravane.

L'invention concerne un appareil auxiliaire d'entraînement destiné à une remorque, ainsi qu'une remorque
munie d'un tel appareil.

Dans le présente mémoire, le terme "remorque"
s'applique à tout véhicule qui ne comporte pas lui-
même de moteur de propulsion et qui est normalement déplacé par remorquage. Il s'agit en particulier de remorques diverses, notamment à bateau, mais surtout des caravanes. En conséquence, la description qui suit concerne
l'application de l'invention aux caravanes, mais cette
dernière n'est pas limitée à cette seule application.

Lorsqu'un conducteur dont le véhicule remorque
une caravane veut placer celle-ci à un endroit choisi, par
exemple à un emplacement d'un terrain de camping, il doit
manoeuvrer son véhicule afin que la remorque se place aussi près que voulu de l'emplacement choisi. Il est très
souvent impossible qu'une simple manoeuvre du véhicule
tracteur, notamment en marche arrière, permette la
disposition de la caravane à l'endroit exact voulu,
compte tenu notamment des obstacles présents. Il arrive
donc souvent qu'une caravane soit détachée du véhicule
tracteur avant d'être disposée à l'emplacement choisi.
Le déplacement final de la caravane s'effectue alors en
général à la main, le conducteur du véhicule devant normalement demander l'aide d'autres personnes.

Pendant cette manoeuvre, la caravane est en appui
sur une roue auxiliaire ou roue "jockey" qui n'est pas
normalement au contact du sol lorsque la caravane est remorquée, mais qui supporte l'avant de celle-ci lorsqu'elle est séparée de son véhicule tracteur. En général,
cette séparation s'effectue par soulèvement de la partie
avant de la caravane, par le timon, par écartement du
timon de la boule d'accrochage du véhicule tracteur, et
par abaissement du timon afin que la roue auxiliaire
vienne au contact du sol. Une fois cette opération réalisée, il reste à déplacer la caravane jusqu'à l'emplacement choisi.

Il faut noter que, compte tenu de la hauteur de la boule d'accrochage fixée au véhicule tracteur, la distance comprise entre le timon et le sol est relativement faible, de l'ordre de 25 centimètres. Comme la roue jockey doit se trouver à une certaine distance du sol lorsque la caravane est accrochée à un véhicule tracteur, il est nécessaire qu'elle ait une petite dimension. Pour cette raison, les roues jockey ont habituellement un petit diamètre et une faible largeur si bien que leur surface d'appui au sol est faible. Cette dernière caractéristique n'est pas très gênante lorsque le sol est relativement ferme et lorsque la roue est folle, c'est-à-dire lorsqu'elle n'a pas à exercer de forces de traction parallèlement au sol.

La description qui précède montre qu'il est très souhaitable qu'une telle roue auxiliaire puisse être menée afin que la manoeuvre de la caravane puisse être assurée par une seule personne.

Le brevet des Etats-Unis d'Amérique n° 3 269 740 décrit un appareil d'entraînement auxiliaire de remorque destiné au déplacement de véhicules très importants. Il comporte un châssis mobile très incliné par rapport à la verticale et décrivant un grand arc de cercle. Lorsqu'un couple d'entraînement est appliqué à une manivelle placée à l'extrémité du châssis mobile, un couple de rotation autour de l'axe vertical d'articulation est aussi appliqué alternativement si bien que l'appareil suit un trajet sinueux. En outre, le montage de la manivelle oblige l'opérateur à conduire la remorque en marche arrière. Enfin, l'encombrement de l'appareil est tellement important qu'il n'est pas possible de l'utiliser de manière permanente, c'est-à-dire monté à demeure sur une remorque. En particulier, il doit être démonté avant tout attelage à un véhicule tracteur. En fait, tous ces mouvements ont empêché le succès commercial de cet appareil.

Le brevet britannique n° 1 579 922 décrit un tel appareil qui comporte une roue qui peut être entraînée manuellement, à l'aide d'une manivelle reliée à la roue par une transmission à chaîne. La roue est montée sur une partie mobile qui peut être réglée télescopiquement en hauteur.

Malgré les avantages importants que présente en principe un tel appareil, celui-ci n'a rencontré aucun succès. En effet, l'appareil réalisé présente tellement d'inconvénients qu'il est inutilisable en pratique. D'abord, le dispositif de montage de la roue sur la partie fixe a un encombrement tellement important que, lorsque l'appareil doit être monté sur une caravane dont le timon se trouve à 25 centimmètres du sol, la roue doit avoir une très faible dimension si bien qu'elle ne présente pas une surface suffisante d'appui au sol pour permettre un entraînement réel. En outre, la roue est montée en porte-à-faux si bien que la charge que peut alors supporter l'appareil est très faible, très inférieure à celle qui est appliquée normalement au timon d'une caravane. En effet, cette force est en général de plusieurs centaines de newtons et elle atteint souvent une valeur de l'ordre de 1 000 N. De plus, cet appareil comporte trois tubes qui doivent tourner ou coulisser les uns par rapport aux autres et qui doivent être obligatoirement usinés. Le coût de cet appareil est donc extrêmement important, d'autant plus que, dès qu'une usure commence à se manifester, le système d'entraînement en translation se bloque entre deux tubes.

Pour toutes ces raisons, l'appareil décrit dans ce brevet britannique n° 1 579 922 n'a rencontré aucun succès.

L'invention concerne un appareil auxiliaire d'entraînement pour remorque, notamment pour caravane, qui résout les problèmes posés par cette manipulation de la caravane pendant la séparation du véhicule tracteur et après cette séparation, et qui ne présente pas les inconvénients du dispositif connu. Plus précisément,

4

l'appareil selon l'invention est extrêmement simple, robuste et il est en outre peu coûteux, étant donné que sa fabrication est très simple. L'appareil permet une utilisation même sur un terrain difficile, mou ou en pente, et même lorsque les forces appliquées sont très élevées. L'appareil peut être laissé en permanence sur la caravane et il ne nécessite aucune modification de celle-ci pour son montage.

Plus précisément, l'invention concerne un appareil auxiliaire d'entraînement pour remorque qui comprend :

- un châssis mobile portant au moins une roue montée sur un essieu et tourillonnant par rapport au châssis mobile autour d'un premier axe destiné à être sensiblement parallèle au sol, et un dispositif d'entraînement de la roue ou des roues autour de l'essieu, ce dispositif d'entraînement ayant un organe mené directement monté sur l'essieu,

- un châssis fixe comprenant un organe de fixation à une remorque,

- un dispositif d'articulation du châssis mobile sur le châssis fixe autour d'un axe sensiblement perpendiculaire au premier axe et destiné à être sensiblement perpendiculaire au sol, ce dispositif d'articulation comprenant un tronçon de tube de section circulaire, solidaire du châssis mobile, et un tronçon de tube de section circulaire, solidaire du châssis fixe, les tronçons de tube étant montés télescopiquement l'un dans l'autre,

- un dispositif de réglage en translation des deux tronçons de tube, et

- un dispositif de blocage temporaire en rotation du châssis mobile par rapport au châssis fixe,

- le châssis mobile étant sensiblement vertical et disposé près de l'axe d'articulation.

Lorsque l'appareil comporte deux roues, elles sont avantageusement placées symétriquement par rapport à l'organe mené d'entraînement et au châssis mobile.

5

Le dispositif d'entraînement comporte avantageusement un pignon fixé sur l'essieu et entraîné par une chaîne passant sur un autre pignon monté sur le châssis mobile et fixé sur un axe parallèle à l'essieu et solidaire d'une manivelle.

Dans une variante, le dispositif d'entraînement comporte une roue crantée fixée à l'essieu et entrainée par une courroie passant sur une autre roue crantée fixée sur un axe parallèle à l'essieu et solidaire d'une manivelle.

Dans une autre variante, le dispositif d'entraîment a un pignon d'engrenage qui est solidaire de l'essieu, un second pignon d'engrenage est fixé à un axe parallèle à l'essieu et solidaire d'une manivelle, et au moins un pignon intermédiaire d'engrenage est placé entre les deux premiers pignons.

Il est en outre avantageux que le dispositif d'entraînement comporte, en plus d'une manivelle, un dispositif destiné à faire varier le rapport de transmission entre la manivelle et les roues.

Dans un mode de réalisation avantageux, le dispositif d'entraînement comporte un moteur, par exemple de type électrique. Il peut s'agir d'un motoréducteur à courant continu. Le moteur et, éventuellement, des organes de commande, sont avantageusement protégés par un coffret étanche. Le moteur peut être éventuellement monté directement sur l'essieu. Dans une variante, l'arbre du moteur a une première extrémité destinée à entraîner l'essieu, directement ou indirectement, et une autre extrémité destinée à coopérer avec une manivelle.

Le dispositif de réglage en translation comporte avantageusement une vis qui tourillonne dans l'un des tronçons de tube, et un écrou fixé à l'autre tronçon de tube, une manivelle étant solidaire de la vis, l'un des tronçons de tube formant avantageusement l'organe de fixation du châssis fixe sur la remorque.

Il est avantageux que le châssis mobile comporte un organe de direction.

6

Il est avantageux que l'axe d'articulation du châssis mobile sur le châssis fixe recoupe sensiblement la surface d'appui au sol de la roue ou de l'une des deux roues.

L'invention concerne aussi une remorque, notamment une caravane, comprenant un appareil auxiliaire d'entraînement du type décrit précédemment.

D'autres caractéristiques et avantages de l'invention ressortiront mieux de la description qui va suivre, faite en référence au dessin annexé sur lequel :

la figure 1 est une perspective, avec des parties arrachées, d'un appareil auxiliaire d'entraînement monté sur une remorque ;

la figure 2 est une perspective partielle d'une variante de l'appareil de la figure 1 ; et

la figure 3 est une coupe schématique d'une partie de l'appareil de la figure 1.

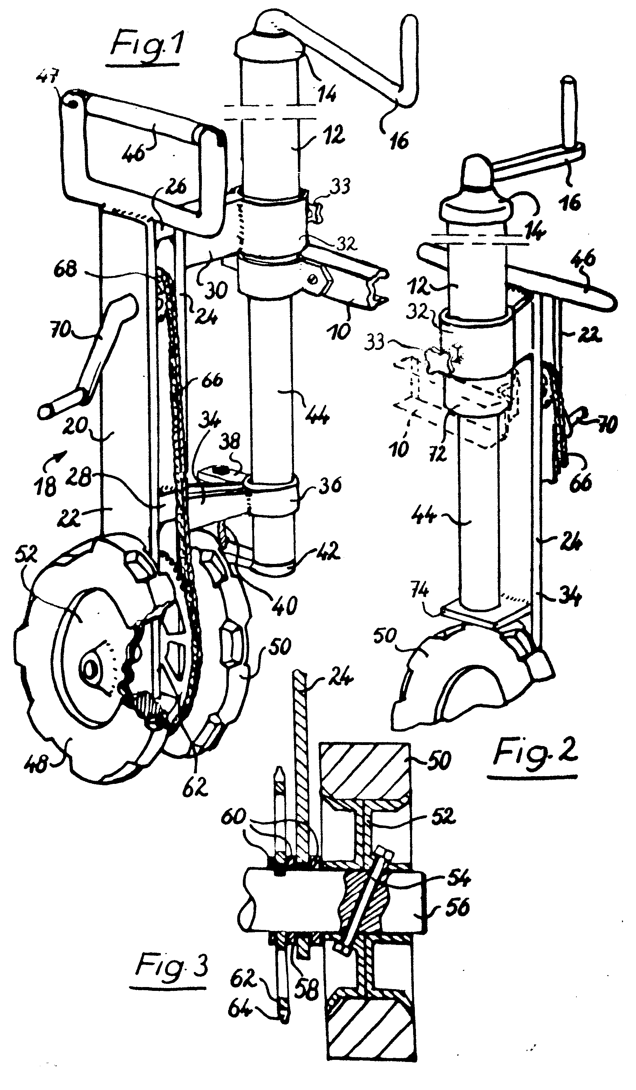

La figure 1 est une perspective d'un mode de réalisation d'appareil auxiliaire selon l'invention, destiné à être monté sur une caravane dont on n'a représenté qu'une partie 10 de timon qui est solidaire d'un tronçon 12 de tube. Ce tronçon 12 fait normalement partie d'un ensemble de réglage en hauteur d'une roue auxiliaire non menée, montée sur un autre tronçon de tube dont la hauteur peut être réglée à l'aide d'une vis solidaire d'une partie rotative 14 entraînée par une manivelle 16. La partie 14 permet la rotation de la vis par rapport au tube 12 mais empêche son déplacement en translation. En conséquence, la rotation de la manivelle permet un réglage en hauteur d'une roue auxiliaire habituelle. Selon l'invention, la roue auxiliaire habituelle et le second tronçon de tube télescopique, destinés à se loger dans le tronçon fixe 12, sont supprimés. La partie 10 du timon et le tronçon 12 de tube forment ainsi un châssis fixe.

Il faut d'abord noter que la partie 10 de timon a sa partie inférieure qui se trouve à une distance du sol de l'ordre de 25 cm, lorsque la caravane est attelée à un véhicule tracteur. Il faut donc que la partie inférieure de l'appareil puisse être placée soit à moins de
25 cm au-dessous du timon, pour un remorquage normal,
soit à une distance supérieure à 25 cm, pour le décrochage
de la caravane puis son déplacement.

L'appareil auxiliaire d'entraînement selon l'invention qui porte la référence générale 18, comporte un châssis mobile 20 articulé sur le châssis 10, 12. Ce châssis
20 comporte d'abord deux barres 22 et 24 placées parallèment l'une à l'autre mais maintenues à distance l'une de
l'autre par des entretoises 26, 28 qui, dans le mode de
réalisation repésenté, sont soudées. Dans des variantes,
les entretoises peuvent être vissées ou rivetées. Des
goussets 30 soudés à la barre 24 portent une bague 32
de guidage destinée à coulisser le long du tronçon fixe
12 de tube et qui peut être bloquée par une vis 33. La
même plaque 24 porte, à sa partie inférieure, des
goussets 34 qui sont soudés sur elle et portent une autre
bague 36 solidaire d'un bras 38. Une vis 40 rend solidaire le bras 38 d'un second bras porté par une bride 42
solidaire d'un écrou non représenté et qui est destiné à
coopérer avec la vis entraînée par la manivelle 16. En
conséquence, la rotation de cette manivelle provoque un
déplacement en translation de l'écrou 42 et en conséquence
du châssis mobile par rapport au tronçon de tube 12. Bien
entendu, un tronçon de tube 44 est solidaire de l'écrou
42 et est destiné à pénétrer télescopiquement dans le
tronçon de tube fixe 12.

Le châssis mobile comporte en outre une poignée 46
qui constitue un organe de direction. Cette poignée a
une partie basculante qui peut tourner de 180° autour de
l'axe 47 et qui donne ainsi un bras de levier qui suffit
pour la conduite de l'appareil. Lorsque l'opérateur
veut changer la direction de celui-ci, il débloque la
vis 33, puis fait tourner le châssis mobile autour du
tube 12 par application d'une force à la poignée 46
et rebloque la vis 33.

Le châssis mobile porte, à sa partie inférieure, deux roues 48 et 50 dont la bande de roulement est relativement large et comporte des motifs permettant un bon accrochage sur des sols divers. Chaque roue a un diamètre relativement grand, de l'ordre de 20 cm, et elle comporte une jante 52 rendue solidaire d'un axe 56 formant un essieu par un boulon 54 passant en biais dans des trous de la jante 52 et de l'essieu 56. De cette manière, les deux roues sont solidaires de l'essieu 56. Un coussinet 58 est monté dans chacune des deux barres 22, 24, et permet ainsi le tourillonnement de l'essieu 56. Des rondelles 60 maintiennent chaque roue à distance de la barre correspondante 22, 24 et maintiennent cette barre à distance d'une couronne dentée 62. Les dents 64 de la périphérie de cette couronne sont en prise avec une chaîne à rouleaux 66 qui passe aussi sur une petite roue dentée 68, solidaire d'un axe, non représenté, et qui peut être entraînée en rotation par une manivelle 70.

Il faut aussi noter que les roues sont placées symétriquement par rapport à la curonne dentée 62 et par rapport aux barres 22, 24 du châssis mobile.

L'appareil comporte aussi avantageusement un capot qui entoure la chaîne afin que l'opérateur ne puisse pas s'y blesser ou s'y salir.

On note sur la figure 1 que la chaîne dépasse sur les côtés des barres 22, 24. Cependant, dans une variante, lorsque les barres 22, 24 sont suffisamment larges, des glissières ou des galets peuvent rapprocher la chaîne du châssis mobile afin que toute la chaîne se trouve soit entre les deux barres 22, 24 soit entre les deux roues.

On considère maintenant le fonctionnement de l'appareil selon l'invention. Il faut d'abord noter que l'appareil 18 est représenté sur la figure 1 en position basse, mais qu'il peut remonter vers une position haute par rapport au timon 10 de la caravane, par rotation de la manivelle 16 dans le sens convenable.

Lorsqu'un conducteur a placé la caravane à proximité de l'emplacement choisi, il serre le frein de la caravane puis, par rotation de la manivelle 16, met les roues 48, 50 au contact du sol et continue ensuite à entraîner la manivelle 16 afin que la sphère d'accrochage de la caravane se sépare de l'attelage du véhicule. Comme le frein de la caravane est serré, le conducteur peut alors éloigner son véhicule. Ensuite, après avoir desserré le frein de la caravane, il tourne la manivelle 70 dans le sens convenable, après orientation de l'appareil 18 à l'aide de la poignée 46 et blocage de la vis 33 qui compense le déport de la manivelle 70 par rapport à l'axe d'articulation de l'appareil.

Comme l'appareil 18 peut tourner d'un très grand angle, de l'ordre de 140°, la mise en position de la caravane est très simple. Grâce au diamètre relativement important des roues et à la grande largeur de leur bande de roulement (5 cm), l'opérateur n'exerce que des forces modérées, même lorsque le terrain est très meuble, et les roues ne s'enfoncent pas dans le sol.

La figure 2 représente une partie d'une variante d'appareil selon l'invention. Dans cette variante, les éléments analogues à ceux du mode de réalisation des figures 1 et 3 portent des références identiques. On note que le dispositif télescopique de réglage en translation est beaucoup plus proche du châssis mobile que dans le mode de réalisation de la figure 1. De cette manière, l'axe d'articulation passe par la surface d'appui au sol de l'une des deux roues. Cet appareil est alors moins encombrant que celui de la figure 1, et convient surtout lorsque l'appareil est directement incorporé au châssis d'une caravane pendant la fabrication de celle-ci. On note en particulier qu'une bride 72 fixée à la partie inférieure du tronçon de tube 12 peut descendre contre une plaque 74 placée juste au-dessus des roues et permet donc une augmentation au maximum de la dimension des roues. Sur la figure 2, on a aussi représenté une variante d'organe 46 de direction qui n'est pas articulé et qui est simplement formé par un tronçon de barre soudé.

Il est important de noter un avantage particulier de l'appareil selon l'invention. Les roues jockeys sont habituellement placées en dehors de l'axe de la caravane. Le montage d'un appareil moteur orientable en position décentrée provoque l'application d'un couple au timon. La vis de blocage 33 de la bride 32 sur le tube 12 rend l'appareil solidaire du châssis de la caravane et non seulement supprime les effets de ce couple, mais encore augmente la rigidité de l'assemblage.

Bien entendu, les manivelles 16 et 70 et la poignée 46 sont suffisamment espacées pour qu'elles ne puisent pas venir en contact quel que soit le réglage de l'appareil.

L'appareil selon l'invention présente l'avantage d'être très simple, très robuste et en conséquence peu coûteux. Bien entendu, d'autres modes de réalisation sont possibles. Bien qu'on ait décrit un dispositif simple d'entraînement à pignons et chaîne, le rapport de démultiplication obtenu peut être insuffisant, par exemple dans le cas de caravanes très lourdes. La transmission peut alors comporter deux chaînes avec un pignon double intermédiaire, d'une manière connue. En outre, une transmission à chaîne peut avoir un rapport variable de transmission par incorporation d'un mécanisme du type à dérailleur. Dans ce cas, le pignon supérieur 68 peut être remplacé par un pignon multiple, et un mécanisme à dérailleur très analogue à celui d'une bicyclette peut être monté à sa place. Il est alors avantageux qu'un galet tendeur maintienne la chaîne 66 sous une tension minimale.

Les hommes du métier connaissent beaucoup d'autres types de transmissions convenant à un tel appareil. Par exemple, une véritable transmission à pignons d'engrenage peut être montée entre l'essieu 56 qui porte les roues et l'axe de la manivelle 70. Les hommes du métier connaissent aussi des transmissions à roues et courroie crantées qui permettent aussi l'application d'un cou-

11

ple voulu, avec la démultiplication choisie, à des roues 48, 50. L'appareil selon l'invention convient aussi bien au montage sur des caravanes existantes sans modification de celles-ci, qu'au montage dès la construction de la caravane. Il peut aussi comprendre, de manière connue, un indicateur de charge solidaire du tube 12.

Bien qu'on ait décrit un mode de réalisation dans lequel l'essieu porte deux roues, l'appareil peut n'en comporter qu'une, surtout lorsque les remorques sont relativement légères ou lorsque la largeur de la bande de roulement est importante.

En outre, le dispositif d'entraînement peut comporter un moteur. Par exemple, dans le cas de l'appareil de la figure 1, la manivelle 70 est supprimée et l'arbre sur lequel est monté le pignon 68 constitue l'arbre de sortie d'un motoréducteur à courant continu dont la tension est adaptée à celle des batteries d'accumulateurs du véhicule tracteur (par exemple 12 V). Le motoréducteur a avantageusement un couple de sortie d'au moins 2 N.m. L'équipement électrique associé au motoréducteur comporte avantageusement un interrupteur général, un inverseur de marche avant-arrière et des fusibles de protection. Eventuellement, un variateur de vitesse peut aussi être associé. Tous ces éléments, y compris le motoréducteur, sont avantageusement montés sur un socle lui-même fixé par exemple sur la barre 22 du châssis mobile 20. Un coffret étanche est avantageusement placé autour de ces éléments et les protège.

Un enrouleur de câble de type connu des hommes du métier, ayant avantageusement une prise normalisée pouvant se brancher directement sur une prise du véhicule tracteur, est aussi monté de préférence sur le châssis mobile.

Lorsque l'appareil est du type à une seule roue, le moteur ou motoréducteur est avantageusement monté directement sur l'essieu, à l'extrémité de celui-ci qui ne porte pas déjà la roue unique.

Il est avantageux que l'extrémité de l'arbre du motoréducteur qui est opposée à celle qui assure l'entraînement de l'appareil, dépasse du boîtier du motoréducteur
ou du coffret étanche et permette le montage d'une manivelle analogue à la manivelle 70. De cette manière, en
cas de panne d'alimentation ou du moteur ou motoréducteur,
l'appareil peut être utilisé manuellement.

Bien qu'on ait décrit un exemple d'appareil muni
d'un moteur électrique à courant continu, de nombreuses
variantes peuvent être réalisées. Par exemple, le moteur
électrique peut être de type alimenté en courant alternatif. En outre, il n'est pas nécessaire que le moteur soit
de type électrique, et d'autres types de moteurs, par exemple à combustion interne, peuvent être utilisés.

Les techniques de construction mécanique utilisées pour la réalisation de l'appareil selon l'invention
sont très simples et bien connues des hommes du métier.
On ne les décrit donc pas en détail, et les matériaux
utilisés sont ceux qu'on utilise normalement pour la construction des roues auxiliaires (châssis en acier galvanisé ou inoxydable, ..., roues en caoutchouc dur ou tendre,
etc.). De même, bien qu'on ait représenté des coussinets
pour le guidage des parties tournantes, celles-ci peuvent
être aussi montées sur des roulements ou même dans de simples trous formés dans le châssis mobile.

0112735

13

## REVENDICATIONS

1.      Appareil auxiliaire d'entraînement pour remorque, du type qui comprend :

- un châssis mobile (20) portant au moins une roue (48, 50) montée sur un essieu (56) et tourillonnant par rapport au châssis mobile autour d'un premier axe destiné à être sensiblement parallèle au sol, et un dispositif (62, 66, 68) d'entraînement de la roue ou des roues autour de l'essieu, ce dispositif ayant un organe mené monté directement sur l'essieu,

- un châssis fixe (12, 32, 44) d'articulation du châssis mobile (20) sur le châssis fixe (12) autour d'un axe sensiblement perpendiculaire au premier axe et destiné à être sensiblement perpendiculaire au sol, ce dispositif comprenant un tronçon (44) de tube de section circulaire solidaire du châssis mobile (20) et un tronçon (12) de tube de section circulaire solidaire du châssis fixe, les tronçons de tube étant montés télescopiquement, et

- un dispositif (14, 16) de réglage en translation des deux tronçons de tube (12, 44), caractérisé en ce que :

- le châssis mobile (20) est sensiblement vertical et disposé près de l'axe d'articulation, et

- il comporte un dispositif de blocage temporaire en rotation du châssis mobile (20) par rapport au châssis fixe (12).

2.      Appareil selon la revendication 1, caractérisé en ce qu'il comprend deux roues (48, 50) placées symétriquement par rapport à l'organe mené et au châssis mobile (20).

3.      Appareil selon l'une des revendications 1 et 2, caractérisé en ce que le dispositif d'entraînement de l'essieu comporte un moteur.

4.      Appareil selon la revendication 3, caractérisé en ce que le moteur du dispositif d'entraînement est un moteur électrique.

5.      Appareil selon l'une des revendications 3 et 4, caractérisé en ce que le moteur du dispositif d'entraî-

14

nement est un motoréducteur à courant continu.

6.  Appareil selon l'une quelconque des revendications 3 à 5, caractérisé en ce que le moteur du dispositif d'entraînement, et, éventuellement, des organes associés pour sa commande, sont placés dans un coffret étanche.

7.  Appareil selon l'une quelconque des revendications précédentes, caractérisé en ce que le dispositif de réglage en translation comporte une vis tourillonnant dans un tronçon de tube et un écrou fixé à l'autre tronçon de tube, et une manivelle solidaire de la vis, l'un des tronçons de tube formant avantageusement l'organe de fixation du châssis fixe sur la remorque.

8.  Appareil selon l'une quelconque des revendications précédentes, caractérisé en ce que le châssis mobile (20) comporte un organe de direction (46).

9.  Appareil selon l'une quelconque des revendications précédentes, caractérisé en ce que l'axe d'articulation du châssis mobile sur le châssis fixe recoupe la surface d'appui au sol de la roue ou de l'une des roues.

10.  Remorque, notamment caravane, caractérisée en ce qu'elle comporte un appareil auxiliaire d'entraînement selon l'une quelconque des revendications précédentes.

1/1

0112735

Fig.1

Fig.2

Fig.3

**Office européen des brevets**

## RAPPORT DE RECHERCHE EUROPEENNE

EP 83 40 2193

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl. ³) |
|---|---|---|---|
| X | US-A-3 269 740 (HUTCHINSON) <br><br> * en entier * | 1-4,7-10 | B 62 D 53/08 |
| X | US-A-3 937 479 (DALTON) <br> * en entier, particulièrement figures 1,2,7,9 * | 1 | |
| A | EP-A-0 035 874 (MORRIS) | 1 | |
| A | AU-A- 499 188 (LAWRENCE) | 1 | |

|  |  |  | DOMAINES TECHNIQUES RECHERCHES (Int. Cl. ³) |
|---|---|---|---|
|  |  |  | B 62 D |

Le présent rapport de recherche a été établi pour toutes les revendications

| Lieu de la recherche <br> LA HAYE | Date d'achèvement de la recherche <br> 07-03-1984 | Examinateur <br> SCHMAL R. |
|---|---|---|

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

_____

& : membre de la même famille, document correspondant

OEB Form 1503. 03.82